Europäisches Patentamt

(19) European Patent Office (11) Publication number: **0 280 410**
B1
Office européen des brevets

(12) **EUROPEAN PATENT SPECIFICATION**

(45) Date of publication of the patent specification: �IntCl (51) Int. Cl.⁵: **H02K 15/02, B21D 43/22**
26.09.90

(21) Application number: 88300755.1

(22) Date of filing: 28.01.88

(54) Method and apparatus for stacking laminas.

(30) Priority: 28.01.87 US 7962

(43) Date of publication of application:
31.08.88 Bulletin 88/35

(45) Publication of the grant of the patent:
26.09.90 Bulletin 90/39

(84) Designated Contracting States:
AT BE CH DE ES FR GB GR IT LI LU NL SE

(56) References cited:
PATENT ABSTRACTS OF JAPAN, vol. 9,
no. 131 (E-319)[1854], 6th June 1985; & JP-A-60 16 156
PATENT ABSTRACTS OF JAPAN, vol. 9,
no. 131 (E-319)[1854], 6th June 1985; & JP-A-60 16 157
PATENT ABSTRACTS OF JAPAN, vol. 9,
no. 131 (E-319)[1854], 6th June 1985; & JP-A-60 16 155
PATENT ABSTRACTS OF JAPAN, vol. 10,
no. 121 (E-401)[2178], 7th May 1986; & JP-A-60 255 042

(73) Proprietor: OBERG INDUSTRIES INC., Silverville Road,
Freeport Pennsylvania 16229(US)

(72) Inventor: Malloy, Joseph Patrick, 2325 Silverville Road,
Freeport Pennsylvania(US)

(74) Representative: Allsop, John Rowland, Rowland Allsop
& Co. Black Boy Yard 15 High Street, West Wycombe
High Wycombe, Bucks. HP14 3AE(GB)

ACTORUM AG

**Description**

BACKGROUND OF THE INVENTION

1. Field of the Invention

This invention relates to method and apparatus for stacking laminas, and more particularly, to a method and apparatus for controlling the height of a lamina stack formed from individually blanked laminas and controlling the skew angle between a stack axis and a conductor slot axis wherein the conductor slot axis is formed from individual laminas of unequal thickness.

2. Description of the the Prior Art

It is well known to form electric motor rotors and stators from individually blanked laminas stacked to form a lamina stack. The individual laminas are blanked from sheet strip material and then stacked together to form a rotor or stator which is pressed on a motor armature shaft. The devices disclosed in U.S. Patent Nos. 2,562,254; 3,202,851; 3,457,445; 3,652,889 and 4,204,314 disclose various types of rotors, stators or electromagnetic cores formed from individual laminas.

It is also known to form a lamina stack in which individual laminas in the stack are interlocked to adjacent laminas to form an interlocked lamina stack. Examples of known interlocked lamina stacks are disclosed in U.S. Patent Nos. 3,110,831; 3,203,077; 4,110,895 and 4,160, 182.

Japanese Patent specifications Nos. 6 016 156, 6 016 157 and 6 025 502 disclose each a controller device for lamina stacking apparatures, for measuring the thickness of iron strips before purching.

JP-A 6 016 155 discloses a new angle controller for a similar apparatus, for altering the twisting angle of the strips in response to the thickness.

U.S. Patent No. 3,590,208 discloses a method for forming a lamina stack which includes stamping a number of laminations to form projections and recesses at points around a circle. Each projection is formed in mating configuration with one of the recesses but is displaced in the circumferential direction around the circle with respect thereto. It is stated that the individual laminations are stacked so that the projections of one lamination engage a recess in the adjacent lamination. As a consequence, each lamination will be angularly displaced, about the common axis formed by all of the circles of the individual laminations, with respect to its adjacent laminations. The stacked laminations are welded together by passing a current through them from one end lamination to the other. Since the individual laminations are separated by the weld projections, all the current will be constrained to flow through these projections, causing them to melt and fuse the laminations together.

U.S. Patent No. 4,445,272 discloses a method and apparatus for constructing a laminated rotor. The apparatus consists of a rotatable carousel having a plurality of rotatable work stations each of which is carried to a plurality of operating stations. Lamina are punched from sheet metal stock and brought back into the stock and held in a friction fit. Sheet stock is then advanced to a stacking station where the lamina is forced onto a rotor shaft. It is stated that the height of the lamina accumulated on the shaft is sensed to determine completion of the rotor.

U.S. Patent No. 4,619,028 discloses apparatus for the manufacture of laminated parts. Stock strip material is blanked to form interlocking laminas for electric motor or generator rotors or stators at successive blanking stations. At a final assembly station the laminas are stacked and pressed into interlocking relationship. In response to an operator input, a predetermined number of reversals or half turns about the stack axis of the previously stacked lamina are provided in order to compensate for nonuniform strip thickness to obtain a rotor or stator of substantially uniform height with respect to the parallelism between the top and bottom laminas in the stack. Rotor conductor slots formed in the stacked laminas are skewed to the stack axis by providing arcuate indexing of each lamina relative to the next preceeding lamina in the stack by an arcuate increment that is determined in response to operator inputs relative to the stack height, the skew angle, nominal lamina thickness and skew direction. However, the thickness of each individual lamina is not taken into account when arcuately indexing the lamina stack prior to stacking the next individual lamina. As a result, if lamina stacks having a given skew angle are mass produced, there is no skew angle uniformity between completed stacks having different numbers of laminas.

While it has been suggested by the prior art devices to stack individually blanked laminas to form a completed lamina stack and to form conductor slots in the stacked laminas which are skewed to the stack axis, there is a need for an improved method and apparatus for forming a lamina stack that is computer controlled to form a lamina stack of preselected stack height. The apparatus must be capable of stacking laminas until the stacking of one additional lamina causes the lamina stack height to exceed a preselected stack height. There is also need for a stamping and blanking apparatus in which the thickness of each lamina determines the positioning of the lamina stack relative to each individual lamina to provide a slot in the stacked laminas that forms a continuous linear slot axis. By utilizing the thickness of each lamina to be stacked to determine the positioning of the lamina stack, a constant skew angle is maintained regardless of the number of laminas in the stack.

SUMMARY OF THE INVENTION

In accordance with the present invention there is provided apparatus for controlling the height of a lamina stack formed from individual laminas blanked from sheet strip material that includes blanking means for blanking from sheet strip material individual laminas each having a preselected configuration. The individual laminas are stacked to form a lamina stack having a stack axis substantially perpendicular to the laminas. Measuring means determines the increase in height of the lamina stack. A controller is connected with the measuring means and has operator entry means for receiving an operator entered preselected stack height. The controller continually determines the height of the lamina stack and stops the stacking of individual laminas on the stack when the lamina stack height substantially equals and does not exceed the preselected stack height.

Further in accordance with the present invention there is provided apparatus for limiting the height of a lamina stack formed from individual laminas blanked from sheet strip material that includes means for blanking from sheet strip material individual laminas each having a preselected configuration. The individual blanked laminas are stacked to form a lamina stack having a stack axis substantially perpendicular to the laminas. Measuring means is provided for determining the increase in height of the lamina stack. A controller, connected with the measuring means, has an operator entry means for receiving an operator entered preselected stack height. The controller continuously determines the height of the lamina stack to continue stacking individual laminas when the increase in lamina stack height is less than the preselected stack height, and to stop stacking of individual laminas before the increase in lamina stack height exceeds the preselected stack height.

Additionally in accordance with the present invention there is provided a method for blanking from sheet strip material individual laminas to form a lamina stack comprising the steps of stamping a slot in sheet strip material and blanking from the sheet strip material individual laminas having a preselected configuration including a slot. The method includes stacking the blanked laminas to form a lamina stack having a stack axis substantially perpendicular to the laminas. The method includes the further steps of measuring the thickness of each lamina, positioning the lamina stack relative each lamina and controlling the positioning of the lamina stack relative each lamina determined by the thickness of each lamina so that the slots in the stacked laminas form a continuous linear slot axis skewed to the stack axis.

Accordingly, the principal object of the present invention is to provide apparatus for controlling the height of a lamina stack formed from individual laminas blanked from sheet strip material.

Another object of the present invention is to provide apparatus for limiting the height of a lamina stack formed from individual laminas blanked from sheet strip material.

An additional object of the present invention is to provide a lamina stack having a continuous linear slot formed from individual slotted openings in which the linear slot axis is skewed to the stack axis by a constant skew angle determined by the thickness of each lamina in the lamina stack. Providing a constant skew angle determined by the thickness of each lamina in the stack ensures skew angle uniformity between completed stacks where it is desired to mass produce lamina stacks each having the same preselected skew angle, regardless of the number of laminas in the completed stack. A precise definition of the present invention is given in claims 1 and 8.

These and other objects of the present invention will be more completely disclosed and described in the following specification, the accompanying drawings, and the appended claims.

## BRIEF DESCRIPTION OF THE DRAWINGS

Fig. 1 is an isometric view of an apparatus for controlling the height of a lamina stack formed from individually blanked laminas which is the subject of this invention.

Fig. 2 is an elevational view of a blanking apparatus taken along line II-II of Figure 1, illustrating the arrangement for rotating a die knock-out chamber and stacking individual blanked laminas.

Fig. 3 is an enlarged fragmentary elevational view of a stack of laminas having slotted openings skewed to an axis perpendicular to the lamina plane as disclosed in the prior art.

Fig. 4 is an enlarged fragmentary elevational view of a stack of laminas having slotted openings skewed to an axis substantially perpendicular to the lamina plane which is the subject of this invention.

## DESCRIPTION OF THE PREFERRED EMBODIMENTS

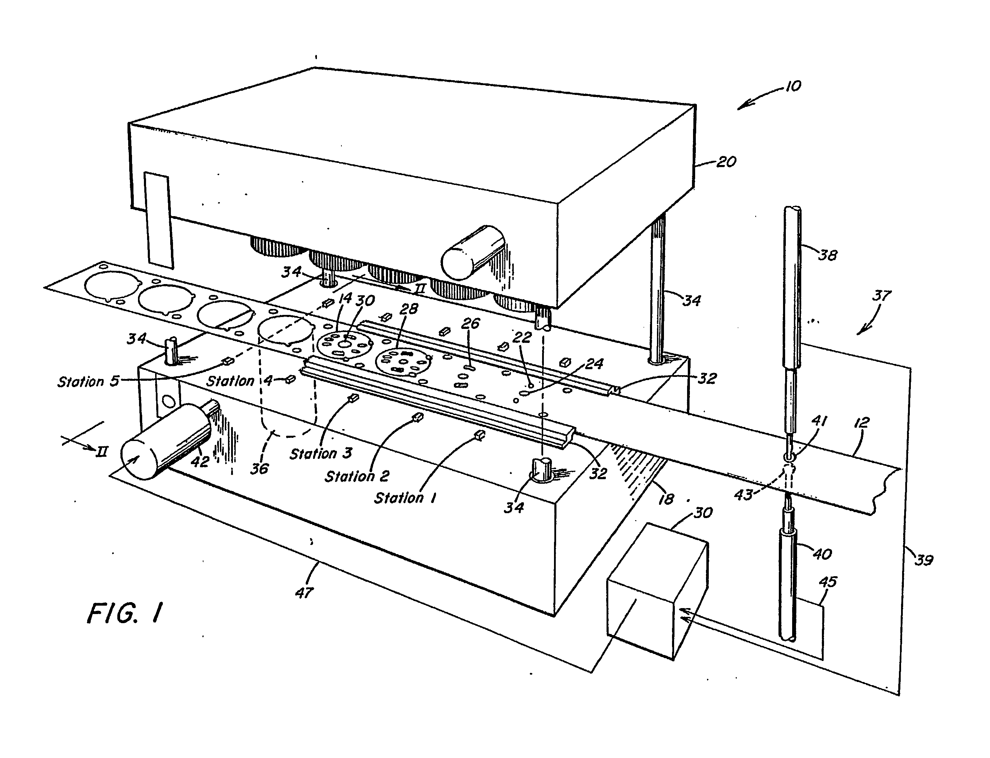

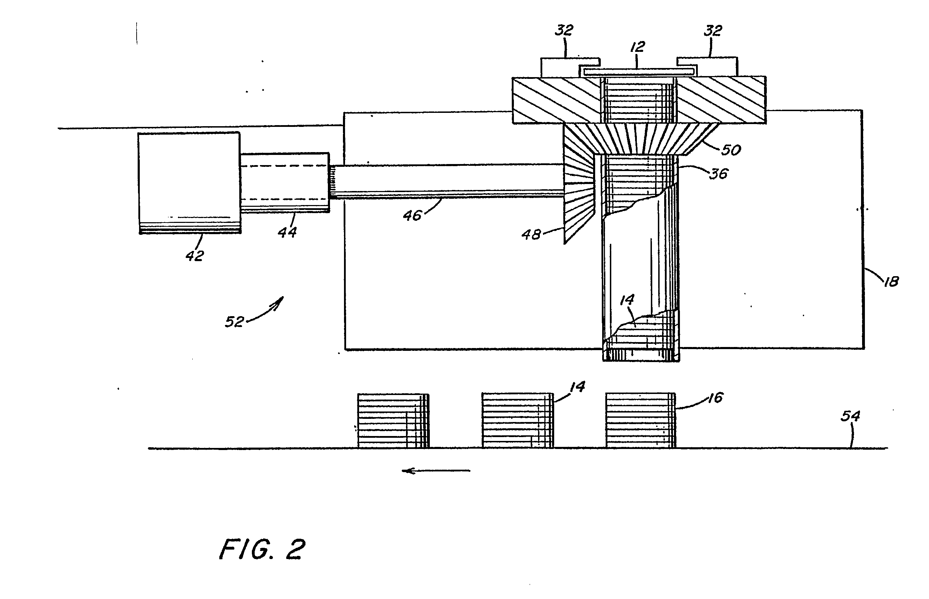

Referring to the drawings and particularly to Figures 1 and 2, there is illustrated apparatus generally designated by the numeral 10 for blanking from sheet strip material 12 individual laminas 14 to form a completed lamina stack 16 for use in electric motor or generators.

The stamping and blanking apparatus generally designated by the numeral 10 includes die shoe assembly 18 and punch assembly 20. Punch assembly 20 is positioned above and securely attached to the die shoe assembly 18. Punch assembly 20 is mounted for reciprocal vertical movement on die shoe assembly 18 by mounting posts schematically illustrated by the numerals 34.

As illustrated in Figure 2, the sheet strip material 12 is passed through stamping and blanking apparatus 10 to progressively blank from sheet strip material 12 individual laminas 14 to form completed lamina stack 16. Stamping and blanking apparatus 10 includes a plurality of individual stamping and blanking stations numbered 1 through 5. Although five stamping and blanking stations are illustrated, it should be understood that stamping and blanking apparatus 10 may include any number of stamping and blanking stations required to stamp the desired openings in sheet strip material 12. It should be further understood that the stamping and blanking apparatus generally designated by the numeral 10 is itself known in the art and is described herein only as it relates to the present invention.

The general operation of stamping and blanking apparatus 10 is as follows. At Station No. 1, interlock tab openings 22 and armature shaft pilot hole 24 are blanked. At station No. 2, arcuate interlocked tabs 26 are lanced from sheet strip material 12 and then depressed below the lower strip surface. At station no. 3, slot openings 28 are blanked. At station no. 4, a lamina 14 is blanked from sheet strip material 12 and shaft hole 30 is simultaneously blanked, after which lamina 14 is pushed back into the plane of sheet strip 12. At station no. 5, lamina 14 is pushed through sheet strip material 12 and into die knock-out chamber 36. As sheet strip material 12 is passed through stamping and blanking apparatus 10, it is maintained in its relative position with respect to die shoe assembly 18 by means of a pair of guides 32, broken away to better illustrate station no. 5.

Referring to Figure 2, there is illustrated a rotating apparatus generally designated by the number 52 for providing rotation of die knock-out chamber 36 within die shoe assembly 18. As will be explained later in greater detail, die knock-out chamber 36 is rotated with die shoe assembly 18 a preselected incremental angular amount to provide a preselected amount of skew between slotted openings 28 in the individual laminas 14 in completed lamina stack 16.

The rotating apparatus generally designated by the numeral 52 includes a bevel ring gear 50 suitably secured to die knock-out chamber 36 to rotatably drive die knock-out chamber 36 within die shoe assembly 18. Bevel pinion gear 48 is positioned in driving engagement with ring gear 50 and in turn is connected through shaft 46 and coupling 44 to motor 42. Motor 42 may be a stepper motor or, for greater torque and rotational speed requirements, a direct current servo motor may be utilized. However, in all cases, a motor which tends to dissipate heat through its housing should be utilized to minimize the adverse temperature effects due to motor 42 heating on die shoe assembly 18.

Individual laminas 14 blanked from sheet strip material 12 form a lamina stack within die knock-out chamber 36. As laminas 14 are forced into die knock-out chamber 36 by operation of punch assembly 20, arcuate interlock tabs 26 blanked in each lamina 14 at station no. 3 cause adjacent laminas 14 to interlock to form a lamina stack 16 of interlocked laminas 14 known in the art. As additional laminas 14 are forced into die knock-out chamber 36 by operation of punch assembly 20, the completed lamina stacks 16 are forced through the bottom of die knock-out chamber 36 and are deposited on the conveyor schematically illustrated as 54 or onto any suitable receiver. It is apparent that the bottom laminas 14 in a lamina stack 16 do not include arcuate interlock tabs 26. Since the bottom lamina 14 in a lamina stack 16 does not include arcuate interlock tabs 26, a plurality of lamina stacks 16 of preselected height may be retained within die knock-out chamber 36.

Referring to Figure 1, sheet strip material 12 fed from a supply coil or other supply (not shown) passes through the thickness measuring apparatus generally designated by the numeral 37 before entering stamping and blanking apparatus 10. The thickness measuring apparatus generally designated by the numeral 37 includes thickness gauge 38 mounted above sheet strip material 12 and thickness gauge 40 mounted below sheet strip material 12. Thickness gauges 38 and 40 may be secured in their respective positions in any suitable manner. Thickness gauges 38 and 40 are of the contacting type of displacement measuring devices known to those skilled in the art. Thickness gauges 38 and 40 include rollers 41 and 43 which contact the top and bottom surfaces respectively of sheet strip material 12. Thickness gauge 38 provides a signal to controller 30 on line 39, and thickness gauge 40 provides a signal to controller 30 on line 45.

Thickness gauges 38 and 40 operate together to measure the thickness of sheet strip material 12 for each lamina stack 16 formed. As previously described, rollers 41 and 43 mounted on thickness gauges 38 and 40 contact the top and bottom surfaces respectively of sheet strip material 12. The distance between rollers 41 and 43 corresponds to the thickness of sheet strip material 12. A preselected number of individual thickness measurements are taken at each point measured, and these thickness measurements are supplied to controller 30 which averages the thickness readings taken to obtain an average thickness measurement for sheet strip material 12.

To practice the present invention, sheet strip material 12 is fed from a supply coil or other supply to stamping and blanking apparatus 10 to blank from sheet strip material 12 individual laminas 14 which are stacked in die knock-out chamber 36. The various openings and tabs 22-28 are blanked in laminas 14 at stations 1-5 in preselected locations for specific applications.

Before sheet strip material 12 passes through the various stations numbered 1-5, the thickness of sheet strip material 12 is measured by thickness measuring apparatus 37 and the thickness measurement readings are provided to controller 30. Thickness measurement readings are taken between operations of punch assembly 20 to minimize thickness measurement errors due to vibration.

The system operator provides to controller 30 the desired preselected height of the completed lamina stack 16 to be formed within die knock-out chamber 36 and a value corresponding to the distance between measuring apparatus 37 and station no. 5. Given the value corresponding to the distance between measuring apparatus 37 and station no. 5, controller 30 automatically calculates the number of laminas 14 of predetermined diameter to be blanked from sheet strip material 12 between measuring apparatus 37 and station no. 5. Thickness measurements are provided to controller 30 by thickness measurement apparatus 37 to provide that the thickness measurement of each successive individual lamina 14 to be blanked from sheet strip material 12 between measurement apparatus 37 and station no. 5 are entered into controller 30. In this manner, the controller identifies the number of laminas 14 between measurement apparatus 37 and station no. 5 and the thickness of each individual lamina 14.

As individual laminas 14 are stacked in die knockout chamber 36 by operation of punch assembly 20, the thickness measurements of each individual lamina 14 provided by measurement apparatus 37 are added together within controller 30 to determine the increase in stack height of the individual laminas 14 in die knock-out chamber 36. Controller 30 continually compares the height of the laminas 14 in die knock-out chamber 36 to the preselected stack height entered into controller 30 by the operator. Controller 30 provides a signal to punch assembly 20 to allow punch assembly 20 to continue blanking from sheet strip material 12 laminas 14 and stacking the laminas 14 in the die knock-out chamber 36 as long as the stack height of the stacked laminas 14 is less than the operator entered preselected stack height.

As previously described, controller 30 adds the thicknesses of each individual lamina 14 in die knock-out chamber 36 to determine the increase in stack height. Controller 30 also has calculated and stored the number of laminas 14 to be blanked from sheet strip material 12 between measurement apparatus 37 and station no. 5 and the thickness of each lamina yet to be blanked. Given the above information, controller 30 calculates the number of additional laminas 14 which may be blanked from sheet strip material 12 and stacked in die knock-out chamber 36 to provide that the height of completed lamina stack 16 does not exceed the preselected height. The continual addition and comparison process within controller 30 provides that a completed lamina stack 16 having a height which does not exceed the preselected stack height is formed.

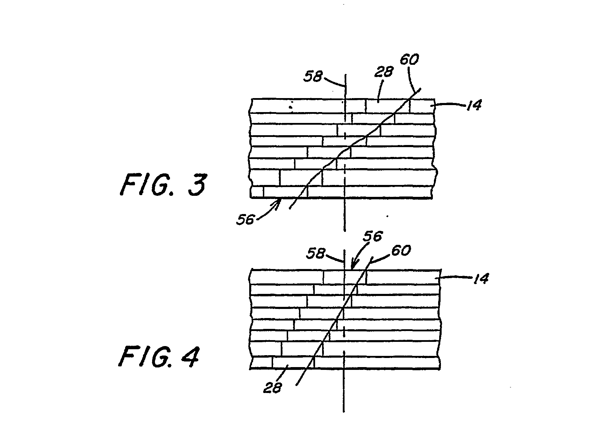

As previously described, stamping and blanking apparatus 10 includes means for rotating die knock-out chamber 36. Die knock-out chamber 36 may be rotated before each individual lamina 14 is stacked. Referring to Figures 2 and 4, the rotating apparatus generally designated by the numeral 52 rotates die knock-out chamber 36 before each individual lamina 14 is stacked so that the slotted openings 28 in the stacked laminas 14 form slot 56 having a slot axis 60 which is skewed to stack axis 58 by a desired skew angle for purposes well known in the art. The skew angle may be left handed or right handed with respect to stack axis 58 depending on whether slot axis 60 crosses stack axis 58 from left to right or right to left as one moves down slot axis 60.

Referring to Figure 3, there is illustrated a stack of laminas 14 having slotted openings 28 which form conductor slot 56. Conductor slot 56 has a slot axis 60 skewed to stack axis 58. As seen in Figure 3 and disclosed in the prior art devices, die knock-out chamber 36 is rotated an equal angular distance prior to stacking each individual lamina 14 to form conductor slot 56. In the prior art devices, die knock-out chamber 36 is rotated an equal angular distance prior to stacking each individual lamina 14 without considering the thickness of each individual lamina 14 in the lamina stack. Since the thickness of sheet strip material 12 varies, the thicknesses of the individual laminas 14 blanked from sheet strip material 12 will also vary. Rotating die knock-out chamber 36 an equal angular distance prior to stacking laminas 14 having unequal thicknesses will form a conductor slot 56 having a nonlinear slot axis 60 skewed to stack axis 58 by a skew angle which is also nonlinear. Since the thickness of each lamina 14 is not taken into account when rotating die knock-out chamber 36, if lamina stacks having a given skew angle are mass-produced, there is no skew angle uniformity between completed stacks 16 when completed stacks 16 have different numbers of laminas 14.

Figure 4 illustrates a stack of laminas 14 having slotted openings 28 which form slot 56. Conductor slot 56 has a slot axis 60 which is skewed to stack axis 58. As seen in Figure 4, slotted openings 28 in laminas 14 form a slot 56 having a linear slot axis 60. Linear slot axis 60 is formed by rotating die knock-out chamber 36 by an angular amount dependant upon the thickness of the each lamina 14 to be placed on the lamina stack.

Referring to Figures 1 and 2, the thickness of sheet strip material 12 measured by thickness measuring apparatus 37 is provided to controller 30. As previously described, since thickness measuring apparatus 37 is placed a preselected distance from station no. 5, controller 30 calculates the number of individual laminas 14 of preselected diameter to be blanked from sheet strip material 12 between thickness measuring apparatus 37 and station no. 5 and also stores the thickness of each lamina 14 to be blanked between measuring apparatus 37 and station no. 5. Before each lamina 14 is blanked from sheet strip material 12 at station no. 5 and forced into die knock-out chamber 36 by operation of punch assembly 20, controller 30 provides a signal to motor 42 on line 47 to rotate die knock-out chamber 36 a preselected angular distance dependant upon the thickness of the lamina 14 to be placed in the lamina stack 16.

In this manner, the amount of angular rotation of die knock-out chamber 36 and lamina stack 16 is controlled by the thickness of each lamina 14 to be placed on lamina stack 16 to provide that the slotted openings 28 in the stacked laminas 14 form a continuous linear slot 56 having a continuous linear slot axis 60 skewed to stack axis 58 by a constant skew angle. As previously described, die knock-out chamber 36 may be rotated in either a clockwise or counterclockwise direction to provide either a right handed or left handed skew axis with respect to stack axis 58. Any desired skew angle may be provided to meet particular application requirements.

**Claims**

1. Apparatus (10) for controlling the height of a lamina stack (16) formed from individual laminas (14) blanked from sheet strip material (12) and controlling the skew angle of slots in the lamina stack comprising stamping means for stamping a slot (56) in sheet strip material, blanking means including means for blanking from sheet strip material (12) individual laminas (14) each having a preselected configuration, each lamina including a slot, means (56) for receiving and stacking said individual blanked laminas (14) to form a lamina stack (16) having a longitudinal stack axis (58) substantially perpendicular to said laminas, mesuring means (37) for measuring the thickness of each of said individual lamina in said lamina stack, said measuring means (37) being operable to measure the thickness of each said lamina (14) before each said individual lamina is added to said lamina stack (16), adding means to continuously add the thickness of all of said lamina in said stack and thereby continuously determine the height of said lamina stack, positioning means (52) for rotating said lamina stack about said longitudinal stack axis (58) and relative to each said individual lamina positioned on said stack, controller means (30) connected to said measuring means (37) and said positioning means (52) for controlling the position of said lamina stack (16) as each of said individual lamina (14) are positioned on said stack, said controller means (30) including said adding means and also including operator entry means for receiving an operator entered preselected lamina stack height, said controller means requiring said adding means to continuously determine the height of said lamina stack (16) and stop said stacking of said individual laminas when said lamina stack height substantially equals and does not exceed said operator entered preselected stack height, and said controller means (30) capable of receiving a signal from said mesuring means (37) enabling said controller means to cause said positioning means (52) to position said lamina stack (16) for each said individual lamina positioned thereon so that said slots (56) in said stacked laminas form a continuous linear slot with the slot axis (60) skewed to said longitudinal stack axis (58).

2. An apparatus (10) for controlling the height of a lamina stack (16) formed from individual laminas (14) blanked from sheet strip material (12) and controlling the skew angle of slots (56) in the lamina stack as set forth in claim 1 in which said measuring means (37) is positioned for measuring the thickness of each said lamina at substantially the center of each said lamina.

3. An apparatus (10) for controlling the height of a lamina stack (16) formed from individual laminas (14) blanked from sheet strip material (12) and controlling the skew angle of slots (56) in the lamina stack as set forth in claim 1 in which said positioning means (52) includes means for rotating said lamina stack about said lamina stack axis (58) while said individual laminas are maintained in a fixed position relative to said lamina stack (16).

4. An apparatus (10) for controlling the height of a lamina stack (16) formed from individual laminas (14) blanked from sheet strip material (12) and controlling the skew angle of slots (56) in the lamina stack as set forth in claim 1 in which said lamina stack is rotated prior to stacking the next individual lamina (14) on said lamina stack (16) by said positioning means (52).

5. An apparatus (10) for controlling the height of a lamina stack (16) formed from individual laminas (14) blanked from sheet strip material (12) and controlling the skew angle of slots (56) in the lamina stack as set forth in claim 1 in which said positioning means (52) includes means for providing incremental angular rotation to said lamina stack (16) about said longitudinal stack axis (58) for each of said laminas (14) positioned on said lamina stack (16).

6. An apparatus (10) for controlling the height of a lamina stack (16) formed from individual laminas (14) blanked from sheet strip material (12) and controlling the skew angle of slots (56) in the lamina stack as set forth in claim 5 in which said positioning means (52) includes means for providing incremental angular rotation to said lamina stack to maintain said continuous linear slot (56) with the axis (60) of said continuous linear slot skewed to said stack axis (58).

7. An apparatus (10) for controlling the height of a lamina stack (16) formed from individual laminas (14) blanked from sheet strip material (12) and controlling the skew angle of slots (56) in the lamina stack as set forth in claim 1 in which said positioning means (52) includes means for rotating said lamina stack about said stacki axis (58) in a preselected angular direction for each of said laminas (14) positioned on said lamina stack (16).

8. A method for controlling the height of a lamina stack (16) formed from individual laminas (14) blanked from sheet strip material (12) and controlling the skew angle of slots (56) in the lamina stack comprising the steps of providing sheet strip material (12) stamping a slot (56) in said sheet strip material, blanking from said sheet strip material (12) individual laminas (14) each having a preselected configuration and each said lamina including a slot (56), stacking said individual blanked laminas to form a lamina stack (16) having a stack axis (58) substantially perpendicular to said laminas, measuring the thickness of each said lamina before each said lamina is added to said lamina stack (16), summing the thickness of each of said lamina having said measured thickness in said stack, positioning said lamina stack relative to each said lamina, controlling said positioning of said lamina stack relative to each said lamina, said positioning being determined by said measured thickness of each said lamina so that said slots (56) insaid stacked laminas form a continuous linear slot with a slot axis (60) skewed to said stack longitudinal axis (58), determining a preselected lamina stack height, and terminating said stacking of said individual blanked lamina (14) on said lamina stack (16) when the height of said lamina stack substantially equals but does not exceed said preselected lamina stack height.

9. A method for controling the height of a lamina stack (16) formed from individual laminas (14) blanked from sheet strip material (12) and controlling the skew angle of slots (56) in the lamina stack as set forth in claim 8 including the further steps of determining the height of said lamina stack (16) by summing the thickness of each lamina positioned on said stack, determining the thickness of the next lamina to be placed on said lamina stack, and terminating said stacking of said lamina when the positioning of the next lamina when the height of said lamina stack exceeds said preselected lamina stack height.

10. A method for controlling the height of a lamina stack (16) formed from individual laminas (14) blanked from sheet strip material (12) and controlling the skew angle of slots (56) in the lamina stack as set forth in claim 8 including the further steps of measuring the thickness of each individual lamina before each said lamina is added to said lamina stack (16), and adding the thicknesses of said individual laminas (14) in said lamina stack to determine the height of said lamina stack.

11. A method for controlling the height of a lamina stack (16) formed from individual laminas (14) blanked from sheet strip material (12) and controlling the skew angle of slots (56) in the lamina stack as set forth in claim 8 including the further step of rotating said lamina stack (16) about said stack longitudinal axis (58) while said individual lamina are maintained in a fixed position relative to said lamina stack (16).

12. A method for controlling the height of a lamina stack (16) formed from individual laminas (16) blanked from sheet strip material (12) and controlling the skew angle of slots (56) in the lamina stack as set forth in claim 8 including the further step of positioning said lamina stack (16) prior to stacking the next of said individual laminas thereon.

13. A method for controlling the height of a lamina stack (16) formed from individual laminas (14) blanked from sheet strip material (12) and controlling tghe skew angle of slots (56) in the lamina stack as set forht in claim 8 including the further step of providing incremental angular rotation of said lamina stack about said stack axis (58) for each of said laminas.

14. A method for controlling the height of a lamina stack (16) formed from individual laminas (14) blanked from sheet strip material (12) and controlling the skew angle of slots (56) in the lamina stack as set forth in claim 8 including the further step of rotating said lamina stack (16) about said stack longitudinal axis (58) while said individual laminas are maintained in a fixed position relative to said lamina stack.

**Patentansprüche**

1. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen, wobei die Vorrichtung aufweist:

Stanzmittel zum Einstanzen von Schlitzen (56) in das streifenförmige Flachmaterial, Mittel zum Ausschneiden, einschließlich solcher Mittel zum Abtrennen der individuellen Zuschnitte (14) vom streifenförmigen Flachmaterial (12), wobei diese Zuschnitte (14) jeweils eine vorgegebene Form und einen Schlitz aufweisen,

Mittel (56) zum Aufnehmen und Stapeln der erwähnten individuellen Zuschnitte (14), um aus diesen einen Flachmaterialstapel (16) zu bilden, der eine Stapellängsachse (58) im wesentlichen senkrecht zu den Zuschnitten aufweist, Meßmittel (37) zur Messung der Dicke jedes einzelnen Zuschnitts (14), bevor jeder einzelne Zuschnitt dem Flachmaterialstapel (16) zugeführt wird, Addiermittel zum kontinuierlichen Summieren der Dicke aller Zuschnitte im erwähnten Stapel und zum kontinuierlichen Bestimmen der jeweiligen Höhe des Flachmaterialstapels, Positionierungsmittel (52) zum Drehen des Flachmaterialstapels um die erwähnte Stapellängsachse (58) sowie relativ zu jedem der einzelnen, auf dem Stapel positionierten Zuschnitte, Steuermittel (30) sowie mit den erwähnten Positionierungsmitteln (52) verbunden sind, um die Position des Flachmaterialstapels zu kontrollieren, wenn jeweils ein individueller Zuschnitt (14) auf diesem Stapel positioniert wird, wobei die Steuermittel (30) die Mittel zum Addieren sowie auch Bedienereingabemittel für den Empfang einer von einer Bedienungsperson eingegebenen vorgewählten Höhe des Flachmaterialstapels aufweisen, wobei die Steuermittel die Addiermittel auffordern, kontinuierlich die Höhe des Flachmaterialstapels (16) zu bestimmen und das Stapeln der individuellen Zuschnitte dann zu beenden, wenn der Flachmaterialstapel im wesentlichen bei der von der Bedienungsperson eingegebenen, vorgewählten Stapelhöhe ist und diese nicht überschreitet, und wobei die Steuermittel (30) ein Signal von den erwähnten Meßmittel (37) empfangen können, welches die Steuermittel in die Lage versetzt, die Positionierungsmittel (52) zu veranlassen, den erwähnten Flachmaterialstapel (16) für jeden der individuellen Zuschnitte, der auf dem Stapel aufgebracht wird, so zu positionieren, daß die Schlitze (56) in den gestapelten Zuschnitte einen kontinuierlichen, linearen Schlitz bilden, wobei die Achse (60) dieses Schlitzes gegenüber der Stapellängsachse (58) geneigt ist.

2. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen gemäß Patentanspruch 1, dadurch gekennzeichnet, daß die erwähnten Meßmittel (37) so positioniert sind, daß sie die Dicke jedes Zuschnitts im wesentlichen in der Mitte dieses Zuschnitts messen.

3. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen nach Anspruch 1, dadurch gekennzeichnet, daß die Positionierungsmittel (52) Mittel aufweisen, um den erwähnten Flachmaterialstapel um die erwähnte Stapelachse (58) zu drehen, während die individuellen Zuschnitte in einer festen Position relativ zu dem Flachmaterialstapel (16) gehalten sind.

4. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen nach Anspruch 1, dadurch gekennzeichnet, daß der Flachmaterialstapel vor dem Stapeln des nächsten individuellen Zuschnitts (14) um die erwähnte Stapelachse (16) durch die Positionierungsmittel (52) gedreht wird.

5. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen nach Anspruch 1, dadurch gekennzeichnet, daß die Positionierungsmittel (52) Mittel aufweisen, um den Flachmaterialstapel (16) um die erwähnte Stapellängsachse (58) um einen vorgegebenen Winkelbetrag für jeden der auf dem erwähnten Flachmaterialstapel (16) aufgebrachten Zuschnitte (14) zu drehen.

6. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen nach Anspruch 5, dadurch gekennzeichnet, daß die Positionierungsmittel (52) Mittel aufweisen, die die erwähnten Mittel, die zum Drehen des Flachmaterialstapels um einen bestimmten Winkelbetrag dienen, steuern, um den kontinuierlichen linearen Schlitz (56) aufrechtzuerhalten, und zwar derart, daß die Achse (60) des sich fortsetzenden linearen Schlitzes gegenüber der erwähnten Stapelachse (58) geneigt ist.

7. Vorrichtung (10) zum Kontrollieren bzw. Steuern der Höhe eines Blech- bzw. Flachmaterialstapels (16), welcher von individuellen Zuschnitten (14) aus einem streifenförmigen Flachmaterial (12) gebildet ist, sowie zum Kontrollieren bzw. Steuern des Neigungswinkels von im Flachmaterialstapel vorgesehenen Schlitzen nach Anspruch 1, dadurch gekennzeichnet, daß die erwähnten Positionierungsmittel (52) Mittel aufweisen, um den erwähnten Flachmaterialstapel um die erwähnte Stapelachse (58) zu drehen, und zwar in einer vorgegebenen Winkelrichtung für jeden der Zuschnitte (14), der auf dem Flachmaterialstapel positioniert wird.

8. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel, gekennzeichnet durch die nachfolgenden Verfahrensschritte zur Verfügungstellung eines streifenförmigen Flachmaterials (12), Einstanzen eines Schlitzes (56) in das streifenförmige Flachmaterial, Abtrennen von einzelnen Zuschnitten (14) vom streifenförmigen Flachmaterial (12), wobei jeder Zuschnitt eine vorgewählte Form sowie einen Schlitz (56) aufweist, Stapeln der einzelnen Zuschnitte, um einen Flachmaterialstapel (16) zu bilden, der eine Stapelachse (58) im wesentlichen senkrecht zu den Zuschnitten besitzt, Messen der Dicke der einzelnen Zuschnitte bevor jeder Zuschnitt zu dem Flachmaterialstapel (16) hinzugefügt wird, Summierung der Dicke der Zuschnitte, die die gemessene Dicke in dem Stapel aufweisen, Positionierung des erwähnten Flachmaterialstapels relativ zu jedem Zuschnitt, Steuerung der Positionierung des Flachmaterialstapels relativ zu jedem Zuschnitt, wobei die Positionierung durch Messen der Dicke jedes Zuschnitts derart bestimmt wird, daß die Schlitze (56) in den gestapelten Zuschnitten einen kontinuierlichen, linearen Schlitz bilden, und zwar mit einer Schlitzachse (60), die gegenüber der erwähnten Stapellängsachse (58) geneigt ist, Bestimmen einer vorgewählten Höhe für den Flachmaterialstapel und Beenden des Stapelns der individuellen Zuschnitte (14) auf dem Flachmaterialstapel (16), wenn die Höhe des Flachmaterialstapels im wesentlichen gleich der vorgewählten Höhe für den Flachmaterialstapel ist und diese vorgewählte Höhe nicht überschreitet.

9. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, dadurch gekennzeichnet, daß dieses Verfahren als weitere Schritte umfaßt Bestimmung der Höhe des Flachmaterialstapels (16) bei Summierung der Dicke der auf den Stapel positionierten Zuschnitte, Bestimmung der Dicke des nächstfolgenden, auf dem Flachmaterialstapel zu positionierenden Zuschnitts, sowie Beendigung des Stapelns des Zuschnitts, wenn beim Positionieren des nächsten Zuschnitts die Höhe des Flachmaterialstapels die vorgewählte Höhe für den Flachmaterialstapel übersteigt.

10. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, dadurch gekennzeichnet, daß dieses Verfahren als weitere Schritte aufweist Messen der Dicke der einzelnen Zuschnitte bevor jeder Zuschnitt zum Flachmaterialstapel (16) zugefügt wird, und

Summierung der Dicken der einzelnen Zuschnitte (14) in dem Flachmaterialstapel, um die Höhe des Flachmaterialstapels zu bestimmen.

11. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, dadurch gekennzeichnet, daß das Verfahren als weitere Schritte aufweist Drehen des Flachmaterialstapels (16) um die Stapellängsachse (58), während die individuellen Zuschnitte in einer festen Position relativ zu dem Flachmaterialstapel (16) gehalten sind.

12. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, dadurch gekennzeichnet, daß das Verfahren als weitere Schritte aufweist Positionierung des erwähnten Flachmaterialstapels (16) vor dem Stapeln bzw. Aufbringen des nächstfolgenden individuellen Zuschnitts.

13. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, wobei das Verfahren als weitere Schritte aufweist Drehen des Flachmaterialstapels um die Stapelachse (58) um einen festen Winkelbetrag für jeden Zuschnitt.

14. Verfahren zum Kontrollieren bzw. Steuern der Höhe eines Flachmaterialstapels (16), der von einzelnen Zuschnitten (14) eines streifenförmigen Flachmaterials (12) gebildet ist, sowie zum Kontrollieren bzw. Steuern des Neigungswinkels von Schlitzen (56) im Flachmaterialstapel nach Anspruch 8, dadurch gekennzeichnet, daß das Verfahren als weiteren Schritt aufweist ein Drehen des Flachmaterialstapels (16) um die erwähnte Stapellängsachse (58), während die einzelnen Zuschnitte in einer festen Position relativ zu dem Flachmaterialstapel gehalten werden.

**Revendications**

1. Appareil (10) pour contrôler la hauteur d'un empilage (16) de tôles constitué de tôles (14) individuelles découpées dans une bande de tôle (12) et pour contrôler l'angle d'inclinaison des encoches de l'empilage de tôles comprenant un moyen d'emboutissage pour emboutir une encoche (56) dans la bande de tôle, un moyen de découpage comportant un moyen de découpage dans la bande de tôle (12) de tôles individuelles (14) ayant chacune une configuration présélectionnée, chaque tôle comportant une encoche, un moyen (56) pour recevoir et empiler lesdites tôles (14) individuelles découpées afin de former un empilage (16) de tôles ayant un axe (58) d'empilage longitudinal sensiblement perpendiculaire auxdites tôles, un moyen de mesure (37) pour mesurer l'épaisseur de chacune desdites tôles individuelles dans l'empilage de tôles et un moyen de mesure (37) utilisable pour mesurer l'épaisseur de chacune desdites tôles (14) avant que chacune desdites tôles individuelles soit ajoutée audit empilage de tôles (16), un moyen d'addition pour ajouter en permanence l'épaisseur de toutes lesdites tôles dudit empilage et par conséquent déterminer de manière continue la hauteur dudit empilage de tôles, un moyen de positionnement (52) pour faire tourner ledit empilage de tôles autour dudit axe longitudinal de l'empilage (58) et par rapport à chacune desdites tôles individuelles placées sur ledit empilage, un moyen contrôleur (30) relié audit moyen de mesure (37) et audit moyen de positionnement (52) pour contrôler la position dudit empilage de tôles (16) au moment où chacune desdites tôles individuelles (14) est positionnée sur ledit empilage, ledit moyen contrôleur (30) comprenant ledit moyen d'adition et comprenant aussi un moyen d'introduction de données par un opérateur pour recevoir une hauteur pré-sélectionnée de l'empilage de tôles, introduite par un opérateur, ledit moyen contrôleur exigeant que ledit moyen additionneur détermine de manière continue la hauteur dudit empilage de tôles (16) et arrête ledit empilage desdites tôles individuelles lorsque ladite hauteur de l'empilage de tôles est sensiblement égale à et ne dépasse pas ladite hauteur présélectionnée de l'empilage, introduite par l'opérateur, et ledit moyen contrôleur (30) étant capable de recevoir un signal transmis par ledit moyen de mesure (37) qui permet audit moyen contrôleur de faire positionner par ledit moyen de positionnement (52) ledit empilage (16) de tôles pour chacune desdites tôles individuelles positionnées dessus de manière que lesdites encoches (56) desdites tôles empilées forment une encoche linéaire continue avec l'axe de l'encoche (60) incliné par rapport audit axe longitudinal (58) de l'empilage.

2. Appareil (10) pour contrôler la hauteur d'un empilage (16) de tôles constitué de tôles (14) individuelles découpées dans une bande de tôle (12) et pour contrôler l'ångle d'inclinaison des encoches de l'empilage de tôles comprenant un moyen d'emboutissage pour emboutir une encoche (56) dans la bande de tôle comme indiqué à la revendication 1, dans lequel ledit moyen de mesure (37) est disposé pour mesurer l'épaisseur de chacune desdites tôles sensiblement au centre de chacune desdites tôles.

3. Appareil (10) pour contrôler la hauteur d'un empilage (16) de tôles constitué de tôles (14) individuelles découpées dans une bande de tôle (12) et pour contrôler l'angle d'inclinaison des encoches de l'empilage de tôles comprenant un moyen d'emboutissage pour emboutir une encoche (56) dans la bande de tôle comme indiqué à la revendication 1, dans lequel ledit moyen de positionnement (52) comprend un moyen pour faire tourner ledit empilage de tôles autour dudit axe de l'empilage de tôles (58) tandis que lesdites tôles individuelles sont maintenues en une position fixe par rapport audit empilage de tôles (16).

4. Appareil (10) pour contrôler la hauteur d'un empilage (16) de tôles constitué de tôles (14) individuelles découpées dans une bande de tôle (12) et pour contrôler l'angle d'inclinaison des encoches de l'empilage (56) de tôles comme indiqué à la revendication 1, dans lequel ledit empilage de tôles est tourné avant l'empilage de la tôle (14) individuelle suivante sur ledit empilage (16) de tôles par ledit moyen de positionnement (52).

5. Appareil (10) pour contrôler la hauteur d'un empilage (16) de tôles constitué de tôles (14) individuelles découpées dans une bande de tôle (12) et pour contrôler l'angle d'inclinaison des encoches de l'empilage de tôles (56) comme indiqué à la revendication 1, dans lequel ledit moyen de positionnement (52) comprend un moyen pour établir une rotation angulaire par incrément dudit empilage (16) de tôles autour dudit axe (58) longitudinal de l'empilage pour chacune desdites tôles (14) placées sur ledit empilage de tôles (16).

6. Appareil (10) pour contrôler la hauteur d'un empilage (16) de tôles constitué de tôles (14) individuelles découpées dans une bande de tôle (12) et pour contrôler l'angle d'inclinaison des encoches de l'empilage de tôles (56) comme indiqué dans la revendication 5, dans lequel ledit moyen de positionnement (52) comprend un moyen pour contrôler ledit moyen de création d'une rotation angulaire par incrément dudit empilage de tôles afin de maintenir ladite encoche (56) linéairement continue avec l'axe (60) de ladite encoche linéaire continue incliné par rapport audit axe (58) de l'empilage.

7. Appareil (10) pour contrôler la hauteur d'un empilage (16) de tôles constitué de tôles (14) individuelles découpées dans une bande de tôle (12) et pour contrôler l'angle d'inclinaison des encoches de l'empilage de tôles (56) comme indiqué à la revendication 1, dans lequel ledit moyen de positionnement (52) comprend un moyen pour entraîner en rotation ledit empilage de tôles autour dudit axe d'empilage (58) dans une direciton angulaire présélectionnée pour chacune desdites tôles (14) positionnée sur ledit empilage de tôles (16).

8. Procédé pour contrôler la hauteur d'un empilage (16) de tôles formée à partir de tôles (14) individuelles découpées dans une bande de tôle (12) et pour contrôler l'angle d'inclinaison des encoches (56) de l'empilage de tôles comprenant les opérations d'introduction de la bande de tôle (12), d'emboutissage d'une encoche (56) dans ladite bande de tôle, de découpage dans ladite bande de tôle (12) de tôles individuelles (14) ayant chacune une configuration pré-sélectionnée et chacune desdites tôles comportant une encoche (56), d'empilage desdites tôles individuelles découpées pour former un empilage (16) de tôles ayant un axe d'empilage (58) sensiblement perpendiculaire auxdites tôles, de mesure de l'épaisseur de chacune desdites tôles avant que chacune desdites tôles soit ajoutée audit empilage (16) de tôles, d'addition de l'épaisseur de chacune desdites tôles ayant ladite épaisseur mesurée à l'épaisseur dudit empilage, de positionnement dudit empilage de tôles par rapport à chacune desdites tôles, de contrôle dudit positionnement dudit empilage de tôles par rapport à chacune desdites tôles, ledit positionnement étant déterminé par ladite épaisseur mesurée de chacune desdites tôles afin que lesdites encoches (56) desdites tôles empilées forment une encoche linéaire ayant un axe d'encoche (60) incliné par rapport audit axe (58) longitudinal de l'empilage, de détermination d'une hauteur pré-sélectionnée de l'empilage de tôles, et d'achèvement dudit empilage desdites tôles (14) découpées individuelles sur ledit empilage (16) de tôles quand la hauteur dudit empilage de tôles est sensiblement égale à mais ne dépasse pa sladite hauteur prédéterminée de l'empilage de tôles.

9. Procédé pour contrôler la hauteur d'un empilage (16) de tôles formé à partir de tôles (14) individuelles découpées dans une bande de tôle (12) et pour contrôler l'angle d'inclinaison des encoches (56) de l'empilage de tôles comme indiqué à la revendication 8, comprenant encore les opérations de détermination de la hauteur dudit empilage (16) de tôles en additionnant l'épaisseur de chacune des tôles positionnées sur ledit empilage, de détermination de l'épaisseur de la prochaine tôle à placer sur ledit empilage de tôles et d'achèvement dudit empilage desdites tôles au moment du positionnement de la prochaine tôle quand la hauteur dudit empilage de tôles dépasse ladite hauteur prédéterminée de l'empilage de tôles.

10. Procédé pour contrôler la hauteur d'un empilgae (16) de tôles formé à partir de tôles (14) individuelles découpées dans une bande de tôle (12) et pour contrôler l'angle d'inclinaison des encoches (56) de l'empilage de tôles comme indiqué à la revendication 8, comprenant encore les opérations de mesure de l'épaisseur de chaque tôle individuelle avant que chacune desdites tôles individuelles soit ajoutée audit empilage (16) de tôles et l'addition des épaisseurs desdites tôles individuelles (14) dudit empilage de tôles pour déterminer la hauteur dudit empilage de tôles.

11. Procédé pour contrôler la hauteur d'un empilage (16) de tôles fromé à partir de tôles (14) individuelles découpées dans une bande de tôle (12) et pour contrôler l'angle d'inclinaison des encoches (56) de l'empilage de tôles comme indiqué à la revendication 8, comprenant encore l'opération de rotation dudit empilage de tôles (16) autour dudit axe longitudinal (58) de l'empilage tandis que lesdites tôles individuelles sont maintenues en position fixe par rapport audit empilage de tôles (16).

12. Procédé pour contrôler la hauteur d'une empilage (16) de tôles formé à partir de tôles (14) individuelles découpées dans une bande de tôle (12) et pour contrôler l'angle d'inclinaison des encoches (56) de l'empilage de tôles comme indiqué à la revendication 8, comprenant encore l'opération de positionnement dudit empilage (16) de tôles avant d'empiler par-dessus la prochaine desidtes tôles individuelles.

13. Procédé pour contrôler la hauteur d'un empilage (16) de tôles formé à partir de tôles (14) individuelles découpées dans une bande de tôle (12) et pour contrôler l'angle d'inclinaison des encoches (56) de l'empilage de tôles comme indiqué à la revendication 8, comprenant encore l'opération de création d'une rotation angulaire par incrément dudit empilage de tôles autour dudit axe (58) de l'empilage pour chacune desdites tôles.

14. Procédé pour contrôler la hauteur d'un empilage (16) de tôles formé à partir de tôles (14) individuelles découpées dans une bande de tôle (12) et pour contrôler l'angle d'inclinaison des encoches (56) de l'empilage de tôles comme indiqué à la revendication 8, comprenant encore l'opération de rotation dudit empilage (16) de tôles autour dudit axe (58) longitudinal de l'empilage tandis que lesdites tôles individuelles sont maintenues en position fixe par rappport audit empilage de tôles.

FIG. 1

FIG. 2

EP 0 280 410 B1

FIG. 3

FIG. 4